**Europäisches Patentamt**

**European Patent Office**

**Office européen des brevets**

(11) Veröffentlichungsnummer : **0 431 401 B1**

(12)

# EUROPÄISCHE PATENTSCHRIFT

(45) Veröffentlichungstag der Patentschrift :
**11.11.92 Patentblatt 92/46**

(51) Int. Cl.$^5$ : **F16L 21/00**

(21) Anmeldenummer : **90122261.2**

(22) Anmeldetag : **22.11.90**

(54) **Rohrschelle.**

(30) Priorität : **02.12.89 DE 3939979**

(43) Veröffentlichungstag der Anmeldung :
**12.06.91 Patentblatt 91/24**

(45) Bekanntmachung des Hinweises auf die
Patenterteilung :
**11.11.92 Patentblatt 92/46**

(84) Benannte Vertragsstaaten :
**AT BE CH DE DK ES FR GB GR IT LI LU NL SE**

(56) Entgegenhaltungen :
**DE-A- 1 750 138**
**DE-C- 3 626 289**
**DE-C- 3 737 669**
**US-A- 3 790 194**

(73) Patentinhaber : **BUEHLER GmbH**
**Ernst-Amme-Strasse 19**
**W-3300 Braunschweig (DE)**

(72) Erfinder : **Reinberg, Detlef, Dipl.-Ing.**
**Bevenroder Str. 122**
**W-3300 Braunschweig (DE)**

(74) Vertreter : **Révy von Belvárd, Peter**
**Im Lindengarten 18**
**CH-9242 Oberuzwil (CH)**

EP 0 431 401 B1

## Beschreibung

Die Erfindung bezieht sich auf eine Rohrschelle nach dem Oberbegriffe des Anspruches 1.

Eine derartige Rohrschelle ist beispielsweise aus der DE-A-1 750 138 bekannt geworden. Dabei werden nach dem Überziehen des zylindrischen Dichtungsringes über die Rohrenden bzw. dem Aufsetzen von Zugsicherungsringen auf die Rohrenden die Spanneinrichtung betätigt, die hier aus einem elastisch zusammenschraubbaren Ring besteht. Das Aufschieben der Ringe bedingt, dass die Rohre nicht Stoss an Stoss vormontiert sein können, ja dass zwangsläufig zwischen ihren beiden Stossflächen ein Spalt verbleibt. Dies spielt dann keine Rolle, wenn durch die Rohre stets ein und dasselbe Medium geführt wird, ist aber unangenehm, wenn nacheinander verschiedene Medien hindurchbefördert werden müssen. So ist es verständlich, dass es im Falle pneumatischer Förderleitungen vielleicht einmal erwünscht ist, Gewürzpaprika hindurchzuleiten, das nächste Mal aber etwa Mehl, wobei niemand die Reste des vorher transportierten Paprika in Form roter Spuren im Mehl entdecken möchte. Zwar lassen sich Rohre durch alle möglichen bekannten Einrichtungen im allgemeinen gut reinigen, nicht jedoch, wenn dazwischen Dichtungsspalte klaffen.

Hinzu tritt noch ein weiterer Effekt, der den oben geschilderten Nachteil noch verstärkt. Wird nämlich der Dichtungsring durch die Spanneinrichtung gegen die Rohrwände gepresst, so weicht er elastisch nach den Seiten, d.h. in Axialrichtung, aus. Dabei nimmt er auch die Rohre mit, die dann, selbst wenn sie vorher Stoss an Stoss lagen, nun eine Dichtungsfuge erhalten. Obwohl Zugentlastungsringe dieser Erscheinung ziemlich gut entgegenwirken können, vermögen sie ihn nicht völlig zu verhindern.

Rohrschellen ähnlicher Art sind auch aus der DE-C 36 26 289 und der US-A-3 790 194 bekannt, doch gehen diese davon aus, dass die Stossflächen der beiden miteiander zu verbindenden Rohre nicht aneinanderstossen, weshalb sie an Stelle eines flachen Dichtungsringes einen solchen mit einer in die Stossfuge zwischen den Rohren eingreifenden Ringrippe aufweisen, denen in axialer Richtung weitere, kleinere, Ringrippen benachbart sind. Derartige Rohrschellen sind für die oben angesprochenen Zwecke nicht geeignet, weil sich allzuleicht Reste des jeweils zuletzt transüportierten Schüttgutmateriales in den so gebildeten Fugen absetzen und von dort nicht mehr ohne weiteres entfernt werden können. Dies kann bei verderblichen Lebensmitteln zu Bakterienansatz und zu unhygienischen Zuständen führen.

Der Erfindung liegt die Aufgabe zugrunde, eine Rohrverbindungsschelle der eingangs genannten Art so auszubilden, dass der Ansatz von Resten des Fördergutes mit Sicherheit verhindert wird. In einem ersten Schritt zur Erfindung löst sich diese vom bisherigen Vorurteil, es müsse unbedingt eine Dichtungsfuge vorgesehen sein und geht von der Erkenntnis aus, dass ein Auseinanderklaffen der beiden Stossflächen der miteinander zu verbindenden Rohre vermieden werden muss. Aus diesem ersten Schritt ergibt sich dann der zweite, der in den kennzeichnenden Merkmalen des Anspruches 1 in Verbindung mit dem im Oberbegriff genannten flachen Dichtungsring zur Lösung der genannten Aufgabe besteht.

Dadurch, dass die Dichtung Raum erhält, um sich beim Spannen zu verformen, überträgt sie keine axialen Kräfte mehr auf die Rohre, und diese können Stossfläche an Stossfläche aneinandergelegt bleiben.

Zweckmässig sind die Merkmale des Anspruches 3 als zusätzliche Sicherung vorgesehen, da auf diese Weise auch anderen, als von der Dichtung ausgehenden, Axialkräften begegnet werden kann.

Durch die Ausbildung mit geteilten Ringen gemäss Anspruch 4 ist es möglich, dieselben auch nach der Montage der Rohre anzubringen, so dass die Rohre bereits Stoss an Stoss vormontiert werden können. Ausserdem kann dadurch der Dichtungsring gegebenenfalls auch in Umfangsrichtung ausweichen, wenn er dem Drucke der Spanneinrichtung unterliegt.

Durch die Ausführung der Rohrschelle in Form von radial aufeinander zu spannbaren Halbzylindern gemäss Anspruch 7 wird ein gleichmässigerer Druck auf den Dichtungsring ausgeübt, als es bei der gattungsbildenden Konstruktion der Fall war.

Die Erfindung wird nunmehr anhand der Zeichnung beispielsweise erläutert, wobei die

Fig. 1 eine über zwei zu verbindende Rohrenden montierte Rohrschelle entsprechend der vorliegenden Erfindung in fertig montierter Weise,

Fig. 2 einen Radialschnitt durch einen Halbzylinder der erfindungsgemässen Rohrschelle, und

Fig. 3 einen Axialschnitt durch dieselbe erfindungsgemässe Rohrschelle darstellt.

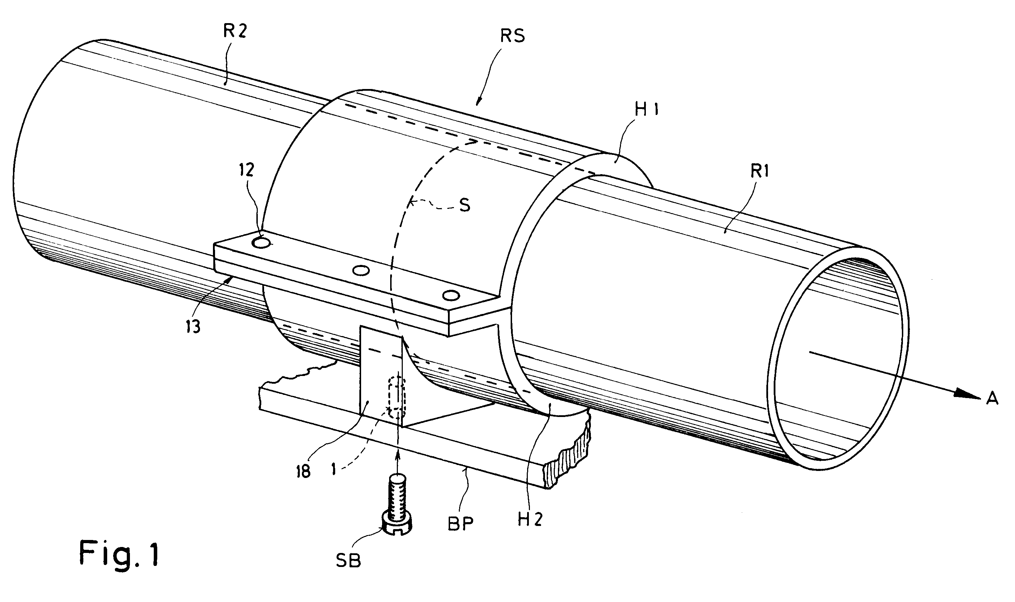

In Fig. 1 sind zwei an einem Stoss S aneinandergefügte Rohrenden R1 und R2 dargestellt, wobei der Verbindungsbereich der Rohrenden mittels einer erfindungsgemässen Rohrschelle RS umschlossen ist. Diese Rohrschelle RS kann, auf Grund ihrer in der Folge beschriebenen Ausbildung, auch nachträglich angebracht werden, nachdem die Rohre R1, R2 (z.B. durch andere, von der Schelle RS entfernte, hier nicht gezeigte Schellen herkömmlicher Art oder durch andere Befestigungsmittel) in die aus Fig. 1 ersichtliche Lage gebracht worden sind.

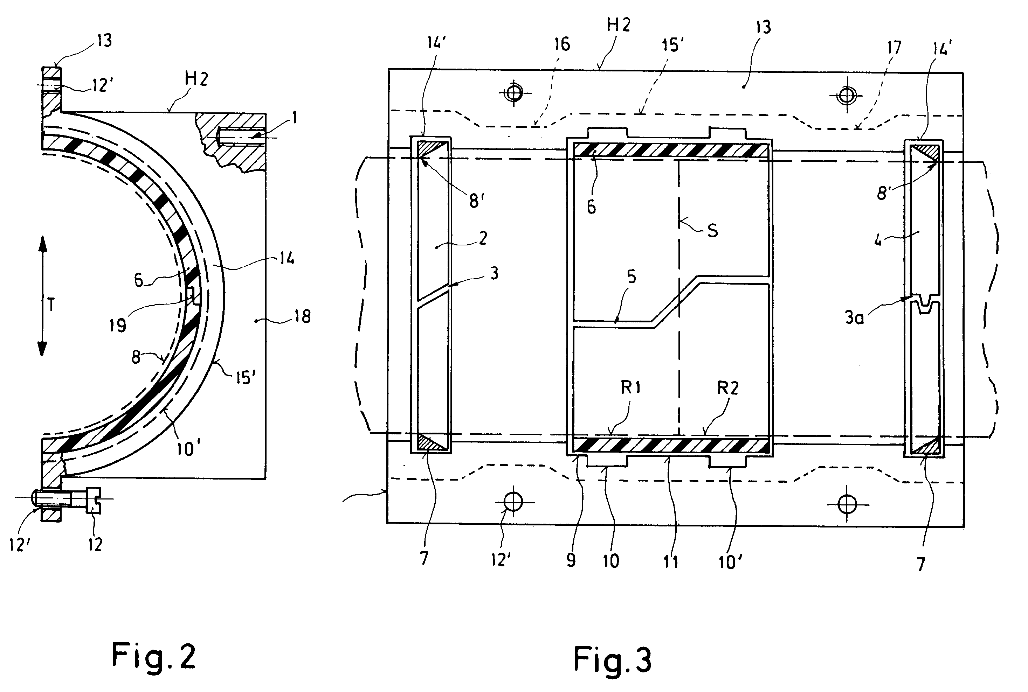

Die Rohrschelle RS weist zwei Halbzylinder H1 und H2 auf, welche entlang ihrer beiden Längsschnittlinien Befestigungsflansche 13 besitzen, welche mittels Bolzen 12 derart gegeneinander verspannt sind, dass die beiden Halbzylinder H1 und H2 die Rohrenden R1 und R2 in kraftschlüssiger Weise umspannen und hierbei die in Fig. 3 dargestellten Dichtungs- und Zugsicherungseinrichtungen zwischen den Halbzylindern H1, H2, und den Rohrenden R1, R2, einklemmen. Diese Ausbildung ist aber nicht zwingend erforderlich, da es ebenso möglich wäre, die beiden Halbzylinder H1, H2 mittels eines Scharniers, an Stelle eines der Flanschen 13 ständig schwenkbar verbunden zu halten und nur an der gegenüberliegenden Seite einen Befestigungsflansch 13 vorzusehen.

Einer der beiden Halbzylinder, H2, weist einen quer zur Rohrachse A liegenden Befestigungsflansch 18 auf, mit Hilfe dessen die gesamte Rohrschelle an einer Befestigungsplatte BP mittels eines oder mehrerer Schraubbolzen SB, welche in Schraublöcher 1 ein-schraubbar sind, befestigt werden kann.

In Fig. 2, welche einen Radialschnitt durch den Halbzylinder H2 zeigt, erkennt man den durch die Teilungsebene T in einen Halb-kreis zerschnittenen Zylinderkörper 14 der Rohrschelle, sowie die axial verlaufenden Befestigungsflansche 13 und den quer zur Rohrachse verlaufenden Befestigungsflansch 18, welcher Schraublöcher 1 zur Befestigung der Rohrschelle an einer Befestigungsplatte BP, wie unter Fig. 1 dargestellt, aufweist.

Auf der Innenseite des halbzylindrischen Körpers 14 erkennt man die zylinderförmige Dichtungseinrichtung 6, sowie die nach innen hervorstehende Schneidkante 8 der ringförmigen Elemente der Zugentlastungseinrichtung, welche im folgenden auch Zugentlastungsringe genannt werden.

Ferner erkennt man in einem der Befestigungsflansche 13 ein Loch 12' zur Aufnahme eines Schraubbolzens 12, mit Hilfe dessen der dargestellte Halbzylinder H2 mit dem symmetrischen Halbzylinder H1 (s. Fig. 1) verschraubbar ist. Zum Zusammenspannen der beiden Halbschalen H1, H2 kann der Bolzen 12 wahlweise mit einer (nicht dargestellten) Mutter verschraubt werden, oder einer der beiden Halbzylinder H1 oder H2 besitzt ein Innengewinde innerhalb des Loches 12'.

Die Fig. 3 zeigt einen Schnitt durch die erfindungsgemässe Rohr-schelle entlang der Teilungsebene T (s. Fig. 2), worin die Anordnung der Zugentlastungsringe 2, 4 sowie der Dichtungseinrichtung 6 auf der Innenseite des Halbzylinders H2 ersichtlich ist.

Die im wesentlichen zylindrische Innenfläche des Halbzylinders H2 weist in ihrem Mittelbereich eine Ausnehmung 9 auf, deren Tiefe in bestimmten Bereichen geringer ist, als die radiale Dicke der Dichtungseinrichtung 6. Diese Ausnehmung 9 besitzt einen Mittelbereich 11, deren Durchmesser geringer ist, als der Durchmesser von zwei dem Mittelbereich 11 benachbarten Ringnuten 10 und 10', so dass beim Spannen der Rohrschelle eine radial auf die Dichtunseinrichtung 6 und im weiteren auf die Rohrenden R1 und R2 wirkende Kraft im wesentlichen auf den Bereich des Mittelbereichs 11 beschränkt ist, wohingegen die Ausnehmungen 10 und 10', die durch die Quetschung der Dichtungseinrichtung 6 im Bereich des Mittelbereichs 11 auftretenden Materialverschiebungen aufnehmen können. Dies verhindert insbesondere auch, dass sich der Rohrstoss S beim Verschrauben durch die sich einzwängende Dichtung verbreitert werden könnte.

In den axialen Randbereichen des Halbzylinders H2 sind zwei Ringnuten 14' und 14'' vorgesehen, welche der teilweisen Aufnahme der Zugentlastungsringe 2 und 4 dienen. Diese Zugentlastungsringe weisen im wesentlichen ein dreieckförmiges Profil auf, wobei die zylindrische Aussenfläche 7 der Zugentlastungsringe auf den Grund der Ringnuten 14' und 14'' zu liegen kommt, wohingegen die Schneidkanten 8 und 8' selbst bei maximal versenkter Stellung der Zugentlastungsringe aus den Ringnuten 14' und 14'' hervorstehen.

Hierdurch wird gewährleistet, dass beim Zusammenspannen der beiden Halbzylinder H1 und H2 die Schneidkanten 8 und 8' in die zylindrischen Aussenflächen der Rohrenden R1 und R2 eingepresst werden.

Die Aussenflächen 15' der Halbzylinder H1 und H2 können entweder durch gerade Zylinderflächen gebildet werden, oder es können Einsenkungen 16 und 17 zur Materialeinsparung und Gewichtserleichterung gebildet werden.

Die ringförmigen Elemente, welche von den Zugentlastungsringen 2 und 4, sowie von der Dichtungseinrichtung 6 gebildet werden, können mit Schlitzen versehen sein, um eine Verminderung ihres Umfangs bzw. Durchmessers beim Zusammenspannen der beiden Halb-schalen H1 und H2 zu erleichtern. Derartige Schlitze können entweder achs-parallel oder, vorteilhafterweise, entsprechend einer der dargestellten Formen ausgebildet sein. Beispielsweise ist der Zugentlastungsring 2 mit einem schräg zur Achse verlaufenden Schlitz 3, der Zugentlastungsring 4 mit einem nach Art einer Feder- und Nutverbindung geformten Schlitz 3a, und die Dichtungseinrichtung 6 mit einem stufenförmigen Schlitz 5 ausgestattet, welcher letztere im Bereich der Stossebene S zwischen beiden Rohrenden R1 und R2 einen schräg zur Rohrachse verlaufenden Bereich und in den zu diesem Bereich benachbarten Randbereichen achs-parallele Teilungsschlitze aufweist.

Ferner besteht die Möglichkeit, welche besonders im Falle der Dichtungseinrichtung 6 von Vorteil ist, den Teilungsschlitz etwa tangential anzubringen, so dass die sich gegenüberliegenden Enden der Dichtungseinrichtung sich keilartig überlappen, wie dies beispielsweise beim Keilschnitt eines Kinofilms der Fall ist. Prinzipiell könnte ein solcher, annähernd tangentialer Teilungsschlitz auch gestuft verlaufen, wie dies an Hand des Schlitzes 19 in Fig. 2 dargestellt ist. In jedem der beschriebenen Fälle erhält man eine Schlitzfläche, die grösser ist, als einem achsparallelen Teilungsschlitz entspräche.

Vorteilhafterweise können alle ringförmigen Elemente auch zwei oder mehrere Schlitze aufweisen, wobei jedoch zweckmässig alle Schlitze ausserhalb der Teilungsebene T angeordnet werden, um eine optimale Dichtung zu gewährleisten.

Entsprechend einer Ausführungsart der Erfindung kann der Mittelbereich 11 der Halbzylinder H1 und H2 auch durch einen, die Dichtungseinrichtung 6 umspannenden Federring gebildet sein, oder es kann, im Falle dass der Dichtungsring aus relativ hartem Material besteht, der Mittelbereich 11 mit einem elastischen Belag oder zumindest mit einzelnen Polstern versehen sein. Der Dichtungszylinder 6 weist jedoch in jedem Fall eine radiale Dicke auf, welche grösser ist als der Unterschied der Durchmesser des Mittelbereichs 11 und der Rohrenden R1 und R2. Hierdurch wird gewährleistet, dass beim satten Aneinanderliegen der Innenflächen der Halbzylinder H1 und H2 und der Aussenflächen R1 und R2 die Dichtungseinrichtung 6 zumindest im Bereich des Mittelbereichs 11 der Halbzylinder, welcher bei der Montage im Bereich der Stossfläche S anzuordnen ist, unter Druck gesetzt wird.

Vorteilhafterweise kann die radiale Tiefe der Ringnuten 14' und 14" oder die Radialdimension des Profils der Zugentlastungsringe 2 und 4 so gewählt werden, dass die herausragende Höhe der Schneidkante 8 beim Spannen der Spanneinrichtung unter üblichem Kraftaufwand in die Aussenseiten der Rohrenden soweit hineingepresst werden, dass die Aussenseiten der Rohrenden im wesentlichen satt auf die Innenflächen der Halbzylinder H1 und H2 zu liegen kommen.

Die Erfindung wurde anhand eines Ausführungsbeispiels im Detail beschrieben, ohne jedoch auf die konstruktiven Einzelheiten dieses Ausführungsbeispiels beschränkt zu sein. Beispielsweise mögen die Zugentlastungsringe 2, 4 für manche Anwendungen entbehrlich sein. Beispielsweise zur Zugentlastung auch ein blosser Klemmsitz innerhalb der Halbzylinder H1, H2 vorgesehen sein.

**Patentansprüche**

1. Rohrschelle zum Verbinden zweier Rohrenden (R1, R2) mit je einer mit der Stossfläche des anderen Rohrendes im wesentlichen glatt zusammenfügbaren Stossfläche, mit einem flachen, radial gegen die Rohrenden spannbaren zylindrischen Dichtungsring (6) zum umfangsmässigen Umschliessen der Stossflächen beider Rohrenden und vorzugsweise einer, radial von aussen nach innen spannbaren Zugssicherungseinrichtung (2, 4) zum Sichern der Rohre gegen axiales Auseinanderziehen, wobei der Dichtungsring (6), gegebenenfalls auch gemeinsam mit der Zugssicherungseinrichtung (2, 4), mittels einer einen radialen Druck ausübenden Spanneinrichtung (H1, H2) radial nach innen spannbar ist, <u>dadurch gekennzeichnet,</u> dass die Spanneinrichtung (H1, H2)

   a) axial neben einer flachen Klemmfläche (11), mit deren Hilfe beim Spannen der Spanneinrichtung ein gleichmässig über den Umfang der Dichtungseinrichtung (6) verteilter, diese in radialer Richtung nach innen zusammenpressender Druck zum Abdichten der Stelle der aneinanderstossenden Stossflächen (S) erzeugbar ist,

   b) wenigstens eine Ringnut (10, 10') zur Aufnahme der elastischen Verformung beim Spannen des Dichtungsringes (6) aufweist.

2. Rohrschelle nach Anspruch 1, dadurch gekennzeichnet, dass im axialen Mittelbereich der Spanneinrichtung ein die Klemmfläche (11) bildender, nach innen hervorstehender Ring angeordnet ist, zu dessen beiden Seiten je eine Ringnut (10, 10') angeordnet ist.

3. Rohrschelle nach Anspruch 2, dadurch gekennzeichnet, dass jeder Ringnut (10, 10') eine jeweils im axialen Randbereich der Spanneinrichtung gelegene Ringnut (14, 14') zur teilweisen Aufnahme der ringförmiger Elemente (2, 4) der Zugsicherungseinrichtung zugeordnet ist.

4. Rohrschelle nach Anspruch 1, 2 oder 3, dadurch gekennzeichnet, dass wenigstens die Dichtungseinrichtung (6), gegebenenfalls auch die Zugsicherungseinrichtung (2, 4), zumindest einen Teilungsschlitz (3, 3a, 5) besitzt, an dem er zum Herumlegen um das Rohr (R1, R2) zu öffnen ist.

5. Rohrschelle nach Anspruch 4, dadurch gekennzeichnet, dass der Schlitz (3, 3a, 5) einen von der Axialrichtung abweicheden Verlauf aufweist, der zweckmässig einen schräg zur Achsrichtung (a) ausgerichteten Verlauf und/oder einen von einer Geraden abweichenden, z.B. einen gestuften (5) oder geschlängelten, Verlauf aufweist.

6. Rohrschelle nach Anspruch 4 oder 5, dadurch gekennzeichnet, dass der Schlitz, gesehen im Querschnitt, etwa tangential ausgeführt ist, wobei der Ring (2, 4, 6) sich überlappende Bereiche aufweist.

7. Rohrschelle nach einem der Ansprüche 1 bis 6, dadurch gekennzeichnet, dass die Spanneinrichtung zwei entlang einer Teilungsebene (T) zusammenspannbare, schalenartige Halbzylinder (H1, H2) besitzt, und dass vorzugsweise der Teilungsschlitz (3, 3a, 5) des Dichtungsringes (6) ausserhalb der Teilungsebene (T) angeordnet ist bzw. jeder Halbzylinder (H1, H2) entlang seiner beiden Längsschnittlinien Flansche (13) aufweist, welche beim Zusammenfügen der beiden Halbzylinder zu einem, die beiden aufeinander ausgerichteten und aneinander anstossenden Rohrenden umschliessenden Vollzylinder paarweise in einander gegenüberliegende Positionen bringbar und mittels Spann- und Halteelementen (12, 12') gegeneinander spannbar und in gespannter Relativstellung fixierbar sind.

8. Rohrschelle nach Anspruch 7, dadurch gekennzeichnet, dass zumindest einer der Halbzylinder (H1, H2) der Spanneinrichtung auf seiner Aussenfläche einen Befestigungsflansch (18) auf weist, mit Hilfe dessen die gesamte Rohrschelle an einer Haltefläche (BP) befestigbar ist.

9. Rohrschelle nach Anspruch 8, dadurch gekennzeichnet, dass der Befestigungsflansch (18) zumindest zwei Schraublöcher (1) zur Aufnahme von mit der Haltefläche verbindbaren Bolzen (SB) aufweist.

**Claims**

1. Pipe clamp for connecting two pipe ends (R1, R2) each of which has an abutting surface which can be substantially smoothly joined to the abutting surface of the other pipe end, comprising a flat, cylindrical gasket (6) which can be clamped radially against the pipe ends so as to circumferentially surround the abutting surfaces of the two pipe ends, and preferably comprising a draw-in locking device (2, 4) which can be clamped radially from the outside inwards to lock the pipes against their being pulled axially apart, the gasket (6) being adapted to be tensioned radially inwards, in common also, if appropriate, with the draw-in locking device (2, 4), by means of a clamping device (H1, H2) exerting a radial pressure, characterised in that the clamping device (H1, H2),
    a) axially adjacent a flat gripping surface (11) with whose help a pressure, which is distributed uniformly over the circumference of the gasket (6) and which squeezes the latter radially inwards to seal the point at which the abutting surfaces (S) abut, can be exerted when the clamping device is tensioned,
    b) has at least one annular groove (10, 10') to absorb the elastic deformation when the gasket (6) is tensioned.

2. Pipe clamp according to claim 1, characterised in that an inwardly protruding ring is disposed in the axial central region of the clamping device so as to form the gripping surface (11), a respective annular groove (10, 10') being disposed to either side of said ring.

3. Pipe clamp according to claim 2, characterised in that a respective annular groove (14, 14') situated in the axial peripheral region of the clamping device is associated with each annular groove (10, 10') to partially receive the annular elements (2, 4) of the draw-in locking device.

4. Pipe clamp according to claim 1, 2 or 3, characterised in that at least the gasket device (6), and if appropriate also the draw-in locking device (2, 4), has at least one parting slot (3, 3a, 5), at which it must be opened in order to be wrapped around the pipe (R1, R2).

5. Pipe clamp according to claim 4, characterised in that the slot (3, 3a, 5) has a profile that deviates from the axial direction, ideally running at an angle to the direction of the axis (a) and/or deviating from a straight line, e.g. a stepped (5) or serpentine profile.

6. Pipe clamp according to claim 4 or 5, characterised in that the slot, viewed in cross-section, runs more or less at a tangent, the ring (2, 4, 6) having overlapping areas.

7. Pipe clamp according to one of claims 1 to 6, characterised in that the clamping device possesses two dish-like half-cylinders (H1, H2) which can be clamped together along a plane of division (T), and that preferably the parting slot (3, 3a, 5) of the gasket (6) is disposed outside the plane of division (T), or each half-cylinder (H1, H2) has, along its two longitudinal sectional lines, flanges (13) which when the two half-cylinders are joined can be brought together pairwise in mutually opposing positions to form a complete cylinder which surrounds the two mutually aligned and abutting pipe ends and by means of clamping and retaining elements (12, 12') can be clamped against one another and located in a tensioned relative position.

8. Pipe clamp according to claim 7, characterised in that at least one of the half-cylinders (H1, H2) of the clamping device has on its outer face a fixing flange (18), with the help of which the whole pipe clamp can be fastened to a retaining surface (BP).

9. Pipe clamp according to claim 8, characterised in that the fixing flange (18) has at least two screw holes (1) for receiving bolts (SB) which can be connected to the retaining face.

## Revendications

1. Collier pour tuyaux, pour la liaison de deux extrémités de tuyau (R1,R2), portant chacune une surface d'about susceptible d'être assemblée, pratiquement lisse, à la surface d'about de l'autre extrémité de tube, avec une bague d'étanchéité (6) plate cylindrique, susceptible d'être serrée radialement contre les extrémités de tube, en vue d'enclore en périphérie les surfaces d'about des deux extrémités de tube et de préférence un dispositif de sécurité en traction (2,4), susceptible d'être serré radialement, de l'extérieur vers l'intérieur, en vue d'assurer la fixation des tubes face à une extraction, où la bague d'étanchéité (6), le cas échéant également, conjointement avec le dispositif de sécurité en traction (2,4), est susceptible d'être serrée radialement vers l'intérieur, au moyen d'un dispositif de serrage (H1,H2) exerçant une pression radiale, caractérisé en ce que le dispositif de serrage (H1,H2)
   a) en vue d'assurer l'étanchéité de l'emplacement des surfaces d'about (S) au contact l'une de l'autre, est susceptible de produire une pression, axialement à côté d'une surface de serrage (11) plate, à l'aide de laquelle, lors du serrage du dispositif de serrage, le dispositif d'étanchéité (6) est comprimé, de façon répartie régulièrement sur sa périphérie, vers l'intérieur en direction radiale,
   b) présente une gorge annulaire (10,10'), en vue de supporter la déformation élastique lors du serrage de la bague d'étanchéité (6).

2. Collier pour tuyaux selon la revendication 1, caractérisé en ce que, dans la zone médiane axiale du dispositif de serrage est disposée, faisant saillie intérieurement et formant la surface de serrage (11), une bague, des deux côtés de laquelle est disposée une gorge annulaire (10,10').

3. Collier pour tuyaux selon la revendication 2, caractérisé en ce qu'à chaque gorge annulaire (10,10) est associée une gorge annulaire (14,14'), située chaque fois dans la zone de bordure axiale du dispositif de serrage, en vue de loger partiellement les éléments annulaires (2,4) du dispositif de sécurité en traction.

4. Collier pour tuyaux selon la revendication 1, 2 ou 3, caractérisé en ce qu'au moins le dispositif d'étanchéité (6), le cas échéant également le dispositif de sécurité en traction (2,4), comporte au moins une fente de division (3, 3a, 5) sur laquelle se produit l'ouverture destinée à faire passer autour du tuyau (R1,R2).

5. Collier pour tuyaux selon la revendication 4, caractérisé en ce que la fente (3, 3a, 5) présente une allure s'écartant de la direction axiale, qui est, de manière appropriée, d'allure inclinée par rapport à la direction axiale (a) et/ou présente une allure s'écartant d'une droite, par exemple une allure étagée (5) ou serpentiforme.

6. Collier pour tuyaux selon la revendication 4 ou 5, caractérisé en ce que, vue en coupe transversale, la fente est quelque peu tangentielle, la bague (2, 4, 6) présentent des zones se chevauchant.

7. Collier pour tuyaux selon l'une des revendications 1 à 6, caractérisé en ce que le dispositif de serrage comporte deux demi-cylindres (H1,H2) formant collier, susceptibles d'être serrés le long d'un plan de division (T), et en ce que, de préférence, la fente de division (3, 3a, 5) de la bague d'étanchéité (6) est disposée à l'extérieur du plan de division (T) et/ou chaque demi-cylindre (H1,H2) présente le long de ses deux lignes de coupe longitudinale des brides (13), qui, lors de l'assemblage des deux demi-cylindres en vue de former un cylindre entier entourant les deux extrémités de tube orientées l'une par rapport à l'autre et venant en contact l'une de l'autre, sont susceptibles d'être mises deux par deux en des positions se faisant face mutuellement et d'être serrées l'une contre l'autre au moyen d'élément de serrage et de maintien (12,12') et d'être fixées en une position relative serrée.

8. Collier pour tuyaux selon la revendication 7, caractérisé en ce qu'au moins l'un des deux demi-cylindres (H1,H2) du dispositif de serrage présente sur sa surface extérieure une bride de fixation (18), à l'aide de laquelle l'ensemble du collier pour tuyau est susceptible d'être fixé sur une surface de maintien (BP).

9. Collier pour tuyaux selon la revendication 8, caractérisé en ce que la bride de fixation (18) présente au moins deux trous taraudés (1) destinés à recevoir des boulons (SB) susceptibles d'être reliés à la surface de maintien.

Fig.1

Fig.2

Fig.3

EP 0 431 401 B1

8